# EUROPÄISCHE PATENTSCHRIFT

(11) **EP 2 128 952 B1**
(45) Veröffentlichungstag und Bekanntmachung des Hinweises auf die Patenterteilung: **02.01.2019**
(21) Anmeldenummer: 09156477.3
(22) Anmeldetag: 27.03.2009
(51) Int. Cl.: H02J 1/04, H05B 33/08, B61L 19/00, B61L 19/06, B61L 3/12

(54) **Verfahren und Vorrichtung zur Speisung von zusätzlichen Sicherungseinrichtungen aus überwachten Stromkreisen**
Method and device for feeding additional safety devices from monitored electricity circuits
Procédé et dispositif d'alimentation de dispositifs de sécurisation supplémentaires à partir de circuits de courant électrique surveillés

(30) Priorität: 30.05.2008 EP 08009920
(43) Veröffentlichungstag der Anmeldung: 02.12.2009
(73) Patentinhaber: Siemens Schweiz AG, 8047 Zürich (CH)
(72) Erfinder: Giugni, Andrea, 8105, Regensdorf (CH); Müller, Xaver, 8602, Wangen (CH); Windisch, Arthur, 8184, Bachenbülach (CH)
(74) Vertreter: Maier, Daniel Oliver

(56) Entgegenhaltungen:
- EP-A1- 1 594 101
- DE-A1- 10 107 578
- GB-A- 2 429 542
- US-A1- 2003 209 997

## Beschreibung

Die vorliegende Erfindung betrifft ein Verfahren zur Speisung und/oder Überwachung von einer zusätzlichen Sicherungseinrichtung aus einem stellwerkseitig überwachten Stromkreis für eine Aussenanlageneinrichtung.

Stellwerke in Eisenbahnanlagen sind für die sichere Bildung von Fahrstrassen für Züge auf eine sehr lange Verwendungsdauer ausgelegt. Die Anschalt- und Kontrolleinrichtungen für die Aussenanlageteile, die sogenannten Stellteile, sind nach den Erfordernissen der jeweiligen betrieblichen Sicherheit ausgebildet und auf den diese Stellteile ansteuernden Stellwerktyp abgestimmt. Damit resultiert eine proprietäre Auslegung von den Stellwerk- und den Stellteileschnittstellen.

Es besteht nun bei der Einführung des europäischen Eisenbahn-Sicherungs-Standards vom Typ ETCS die Aufgabe, z.B. die mittels Lichtsignalen ausgegebene Fahrtberechtigungs-Information, neben den Signalen gleichzeitig auch über eine ETCS-Balise in Form eines Telegramms für das den zugehörigen Streckenpunkt passierende Fahrzeug mittels eines Uploads (Informationsrichtung Balise zum Fahrzeug) zur Verfügung zu stellen.

Für solche Aufgaben stehen sogenannte Line-side electronic units (LEU) zur Verfügung, welche z.B Bahnprozess-Sicherungsinformation wie z.B. Lichtsignalbegriffe (durch rückwirkungsfreies Auslesen aus den zugehörigen Ansteuerstromkreisen) erfassen und diese mittels geeigneter Konversion synchron für Zweit- und Drittverfahren zur Verfügung stellen. Beispielhaft ist dafür als eine solche Konversion das schon weiter oben erwähnte Ausgeben eines Fahrbegriffes eines Signals über eine ETCS-Balise in die Steuerung des Fahrzeugs.

Der Begriff der LEU ist jedoch nicht auf die obige beschriebene Funktionalität beschränkt, er beinhaltet generell "elektronische Equipment" im Gleisbereich, welche Aufgaben im Bahnprozess zur Gewährleistung des sicheren und störungsfreien Betriebs wahrnehmen.

Solche LEU als elektronische Einheiten erfordern jedoch eine Speiseversorgung mit dem Leistungsniveau meist im einstelligen Wattbereich. Eine Zuführung dieser Betriebsenergie über eine neu zu erstellende Infrastruktur mit einer Gewährleistung von hoher Zuverlässigkeit, Verfügbarkeit und definierten Parametern sowie Ausfalloffenbarung bringt generell hohe Kosten selbst bei einer bescheidenen Funktionalität dieser Versorgung.

Es ist darum ein Verfahren anzustreben, mit welchem die bereits installierten Stromkreise in den Stellwerkanlagen zu den Aussenanlagen weitgehend für die Speisung solcher LEU-Funktionalitäten genutzt werden können.

Die derzeitige Lösung besteht aus der Zuführung des Niederspannungsnetzes über Stellwerkkabel zu den dezentralen Stellteilen wie z.B. die LEU-Einheiten am Gleis. Alternativ werden heute auch Lösungen mit Hilfe von Fotovoltaik und als Puffer passiven Zellen (Akkus) zur Energiespeicherung beschrieben. Eine solche alternative Einrichtung ist jedoch aufwendig und eine Überwachung der Funktion zur Gewährleistung der Versorgungssicherheit wie insbesondere der Ausfallerkennung ist generell mit erheblichen Unschärfen bezüglich präventiver Erkennung von Ausfallindikatoren verbunden. Aus US2003/0209997 und GB2429542 ist bekannt, in Lichtanlagen, in denen die Glühlampen durch stromsparende LED Technik ersetzt wurden, die verbrauchte Leistung nur zu bestimmten Zeitpunkten mithilfe einer Dummy-Last zu erhöhen, um Energie zu sparen und gleichzeitig die Glühlampen zu emulieren.

Die alternativen genannten Lösungen stehen somit in einem gewissen Widerspruch mit Sicht auf die Anforderung zur Gewährleistung der technischen Sicherheit in den meisten Stellwerktypen. Damit ist das Verhalten alternativer Speisesysteme meist nicht, respektive nicht vollständig passend zu den durch die Stellwerke vorgegebenen erforderlichen Eigenschaften der Speisekreise. Das wiederum beeinträchtigt die sicherheitstechnischen Eigenschaften.

Eine erfindungsgemässe Lösungen für dieses Problem wird in den Patentansprüchen 1 und 6 angegeben. Vorteilhafte Ausgestaltungen der Erfindung sind den Unteransprüchen zu entnehmen.

Erfindungsgemäss ist daher ein Verfahren zur Speisung und/oder Überwachung von einer zusätzlichen Sicherungseinrichtung aus einem stellwerkseitig überwachten Stromkreis für eine Aussenanlageneinrichtung vergesehen, welches die folgenden Schritte umfasst:
a) stellwerkseitiges Einspeisen einer dem gewünschten Einstellungszustand der Aussenanlageneinrichtung entsprechenden elektrischen Gesamtleistung in dem überwachten Stromkreis;
b) Erfassung der in den überwachten Stromkreis eingespeisten Gesamtleistung an einem in den überwachten Stromkreis eingeschalteten Konverter;
c) Verwaltung der in den überwachten Stromkreis eingespeisten Gesamtleistung durch den Konverter in einer Weise, dass
   c1) die für den gewünschten Einstellungszustand erforderliche elektrische Leistung als eine erste Teilleistung an die Aussenanlageneinrichtung abgegeben wird;
   c2) eine Leistungsdifferenz zwischen der elektrischen Gesamtleistung und der abgegebenen ersten Teilleistung zumindest teilweise in Form einer Speiseleistung an die zusätzliche Sicherungseinrichtung abgegeben wird, wobei der Konverter eine allfällig verbleibende Differenz zwischen der eingespeisten Gesamtleistung und der Summe aus der ersten Teilleistung und der Speiseleistung verbraucht, vorzugsweise mittels eines vom Konverter gesteuerten Lastwiderstands, und/oder die allfällig verbleibende Differenz von dem Konverter gesteuert gespeichert wird.

Diese Lösung steht somit in einem Einklang mit Sicht auf die Anforderung zur Gewährleistung der technischen Sicherheit in den meisten Stellwerktypen. Damit ist das Verhalten dieses Speisesystems vollständig passend zu den durch die Stellwerke vorgegebenen erforderlichen Eigenschaften der Speisekreise.

Das wiederum garantiert die sicherheitstechnischen Eigenschaften.

Vorteilhafte Ausgestaltungen des Verfahrens sehen es vor, dass:
a) die Verwaltung der in den überwachten Stromkreis eingespeisten Gesamtleistung durch den Konverter weiter so erfolgt, dass bei Vorliegen des bestimmungsgemässen Zustands der Aussenanlageneinrichtung und/oder der zusätzlichen Sicherungseinrichtung die stellwerkseitig eingespeiste Gesamtleistung in dem überwachten Stromkreis innerhalb einer vordefinierten Toleranz aufgenommen wird;
d) anhand der vom Stellwerk eingespeisten elektrischen Gesamtleistung der gewünschte Einstellungszustand der Aussenanlageneinrichtung mittels des Konverters ermittelt wird und die Höhe der ersten Teilleistung an diesen ermittelten Einstellungszustand angepasst wird;
e) im Konverter eine Leistungsmatrix für die erste Teilleistung in Abhängigkeit vom erwünschten Einstellungszustand hinterlegt wird und mittels des Konverters geprüft wird, ob die vorgesehene Teilleistung auch tatsächlich von der Aussenanlageneinrichtung bezogen wird;
f) bei Überschreiten einer vorbestimmbaren Schwelle für den Unterschied der gemäss Leistungmatrix vorgegebenen Höhe der ersten Teilleistung und der tatsächlich konsumierten ersten Teilleistung eine Lastfehlanpassung konverterseitig vorgenommen wird, die in dem Stellwerk die Feststellung einer Grenzwertverletzung im überwachten Stromkreis auslöst.

Die erfindungsgemässe Lösung sieht ausserdem neben dem Verfahren eine Einrichtung zur Speisung und/oder Überwachung von einer zusätzlichen Sicherungseinrichtung aus einem stellwerkseitig überwachten Stromkreis für eine Aussenanlageneinrichtung vor, welche folgendes umfasst:
a) eine stellwerkseitige Einspeisung einer dem gewünschten Einstellungszustand der Aussenanlageneinrichtung entsprechenden elektrischen Gesamtleistung in den überwachten Stromkreis;
b) einen Konverter, der die in den überwachten Stromkreis eingespeiste Gesamtleistung erfasst und
c) die in den überwachten Stromkreis eingespeiste Gesamtleistung in einer Weise überwacht, dass
   c1) die für den gewünschten Einstellungszustand erforderliche elektrische Leistung als eine erste Teilleistung an die Aussenanlageneinrichtung abgegeben wird;
   c2) eine Leistungsdifferenz zwischen der elektrischen Gesamtleistung und der abgegebenen ersten Teilleistung zumindest teilweise als Speiseleistung an die zusätzliche Sicherungseinrichtung abgegeben wird, wobei der Konverter eine allfällig verbleibende Differenz zwischen der eingespeisten Gesamtleistung und der Summe aus der ersten Teilleistung und der Speiseleistung verbraucht, vorzugsweise mittels eines vom Konverter gesteuerten Lastwiderstands, und/oder die allfällig verbleibende Differenz von dem Konverter gesteuert gespeichert wird.

Die weiteren vorteilhaften Ausgestaltungen der Erfindung bestehen darin, dass:
a) die Verwaltung der in den überwachten Stromkreis eingespeisten Gesamtleistung durch den Konverter weiter so erfolgt, dass bei Vorliegen des bestimmungsgemässen Zustands der Aussenanlageneinrichtung und/oder der zusätzlichen Sicherungseinrichtung die stellwerkseitig eingespeiste Gesamtleistung in dem überwachten Stromkreis innerhalb einer vordefinierten Toleranz aufgenommen wird;
d) anhand der vom Stellwerk eingespeisten elektrischen Gesamtleistung der gewünschte Einstellungszustand der Aussenanlageneinrichtung mittels des Konverters ermittelt wird und die Höhe der ersten Teilleistung an diesen ermittelten Einstellungszustand angepasst wird;
e) im Konverter eine Leistungsmatrix für die erste Teilleistung in Abhängigkeit vom erwünschten Einstellungszustand hinterlegt ist und mittels des Konverters geprüft wird, ob die vorgesehene Teilleistung auch tatsächlich von der Aussenanlageneinrichtung bezogen wird;
f) bei Überschreiten einer vorbestimmbaren Schwelle für den Unterschied der gemäss Leistungmatrix vorgegebenen Höhe der ersten Teilleistung und der tatsächlich konsumierten ersten Teilleistung eine Lastfehlanpassung konverterseitig vorgenommen wird, die in dem Stellwerk die Feststellung einer Grenzwertverletzung im überwachten Stromkreis auslöst.

Die Erfindung wird nachfolgend anhand der Zeichnung mit besonders bevorzugten Ausführungsbeispielen näher erläutert. Dabei zeigen:
- Figur 1: in schematischer Darstellung eine Aufbau einer Einrichtung zur Speisung und/oder Überwachung von einer zusätzlichen Sicherungseinrichtung aus einem stellwerkseitig überwachten Stromkreis für eine Aussenanlageneinrichtung; und
- Figur 2: in schematischer Darstellung eine Aufbau einer Einrichtung zur Speisung und/oder Überwachung von einer zusätzlichen Sicherungseinrichtung aus einem stellwerkseitig überwachten Stromkreis für eine Aussenanlageneinrichtung mit zusätzlichem Energiespeicher.

Der eigentliche Ansatz besteht darin, dass die bestehenden Verbindungen vom Stellwerk über die Kabel in die Aussenanlagen unverändert betrieben werden. In der Aussenanlage selbst jedoch wird die durch das Stellwerksystem zugeführte elektrische Energie zum Betreiben einer Funktionseinheit am Gleis, wie z.B. eine Glühlampe oder eine die Glühlampe ersetzenden LED-Leuchte in einem Signal, auf eine oder mehrere weitere Einheiten aufgeteilt. Das können z.B. diese sogenannten LEU's sein, die versorgt werden. Das bedeutet jedoch, dass die Stromzufuhr in den Aussenanlagenteil in der bestehenden Funktion und Parametrierung nicht verändert werden darf, da sonst grössere Änderungen am Stellwerk für die Anpassung der Überwachung der Stromkreise erforderlich wären. Grössere Leistungen in den Stromkreisen zu den Aussenanlage-Einheiten reduzieren auch die Stelldistanz, was nicht in jedem Falle zulässig ist. Zu erwähnen ist dabei weiter die Tag- zu Nachtumschaltung bei den Lichtsignalen. Dabei wird die Betriebsspannung dem jeweiligen Modus (Tag oder Nacht) angepasst, der überwachte Strom stellt sich entsprechend der Last ein. So ist die Lichtstärke eines Signals in der Nacht wesentlich herabgesetzt und damit die eingespeiste Leistung reduziert.

### Ansatz 1 für eine Versorgung von mehreren unabhängigen Funktionseinheiten in der Aussenanlage

Es wird nun ein Verbraucher (z.B. eine Glühlampe) mit einer definierten Funktion in der Aussenanlage, welcher mit mindestens einem definierten und überwachten Parameter angesteuert/betrieben wird, durch einen Verbraucher gleicher Funktion, jedoch mit geringerem Leistungsbedarf ersetzt. Die frei werdende Differenz an Energie wird für die Speisung einer weiteren Funktionseinheit wie einer LEU eingesetzt. Dabei nutzen die beiden Verbraucher die zugehörige Stromkreisüberwachung gemeinsam summarisch.

### Beispiel zu Ansatz 1

Es wird nun in den Lichtsignalen anstelle einer Glühlampe eine LED-Lichtquelle eingesetzt. Die modernen Typen verfügen über eine wesentlich bessere Lichtausbeute im Vergleich zu Signallampen. Es stehen sich Spitzenwerte gegenüber bei Glühlampen mit ca. 15 Lumen / Watt, bei den LED werden bis 80 Lumen / Watt erreicht, Tendenz weiter steigend wesentlich bis über hundert Lumen / Watt.

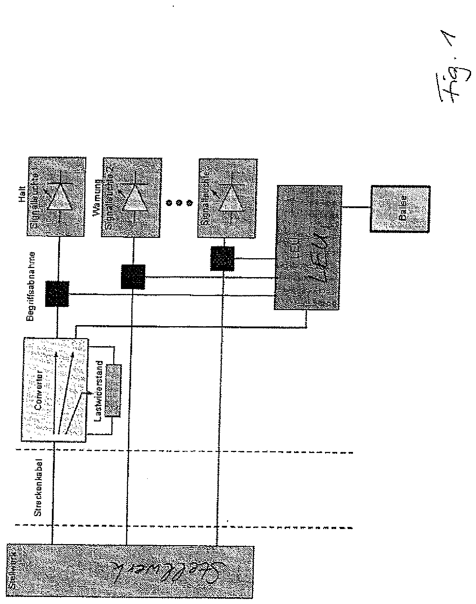

Auch wenn die Anschaltungen bei LED Lichtquellen nicht ganz ohne Schaltungsverluste arbeiten, so hilft wieder der Umstand, dass bei LED der Lichtstrom im Arbeitsbereich weitgehend proportional dem Speisestrom ist. Damit steht auch im Nachtbetrieb neben der Versorgung der Lichtquelle hinreichend Energie für andere Speiseaufgaben wie LEU zur Verfügung. Ein derartiges schematisches Schaltbild ist in der Figur 1 gezeigt.

### Ansatz 2

Ein zweiter Ansatz besteht darin, dass die ursprüngliche Funktionseinheit belassen wird und die Kennwerte im Kreis entsprechend für die zusätzliche Versorgungsaufgabe die Leistung erhöht wird und entsprechend die überwachten Parameter angepasst werden. Es ist damit eine Einrichtung erforderlich, welche die Gesamtlasten aller Verbraucher so steuert, dass gegen das ansteuernde Stellwerk jederzeit die ursprünglich festgelegte Versorgungslast auftritt.

Es wird also ein Verfahren angegeben, welches erlaubt, ohne eine Änderung an den Stellwerken mit ihren Kabelanlagen eine Erweiterung der Funktionalität (beispielhaft Lichtsignal und ETCS-Balise und allenfalls weitere Funktionen für die Abgabe der Fahrtbegriffe) in der Aussenanlage, insbesondere auf der Basis gleicher Bahnprozessdaten (z.B. Fahrterlaubnis) vorzunehmen.

Es wird in der Aussenanlage lokal im Bereich einer spezifischen bahntechnischen Funktionsstelle ein Konverter eingesetzt. Dieser Konverter übernimmt die Steuerung des Flusses der Speise-Energie für die in dieser Funktionsstelle betriebenen diskreten Funktionseinheiten.

Für die Zuteilung der Speisungskontrolle bestehen zwei unterschiedliche Ansätze.

### Ansatz 1

Der Konverter wird exklusiv durch das Stellwerk gespiesen. Er repräsentiert damit die gesamte Last gegen das Stellwerk. Damit liegt zu Zuständigkeit für Lastaufteilung und die Regulierung und die Möglichkeit der Beeinflussung der stellwerkseitigen Überwachungseinrichtung exklusiv beim Konverter (vgl. Figur 1).

### Ansatz 2

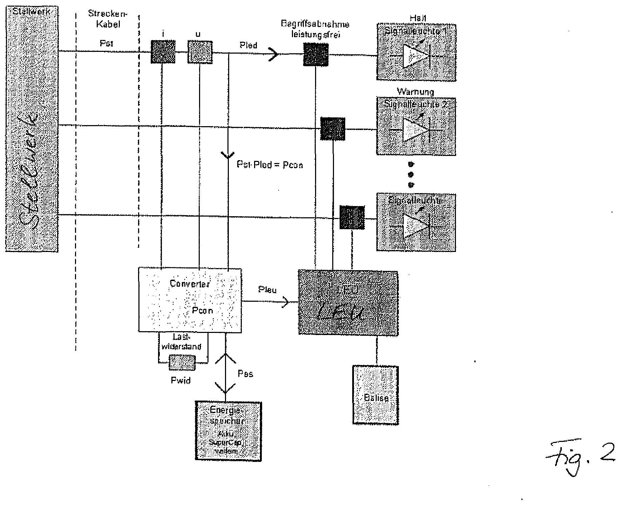

Es wird ein Teil m aller n-Funktionseinheiten, mindestens jedoch eine Funktionseinheit, direkt durch das Stellwerk gespiesen (m,n sind natürliche Zahlen, n>m).
Der Konverter hat auf diese m-Einheiten keine direkte Möglichkeit für eine Einwirkung. Der Konverter überwacht und steuert jedoch den Gesamtfluss der Energie von Stellwerk in die bahntechnische Funktionsstelle und kann dabei jederzeit in den Gesamtfluss eingreifen (vgl. Figur 2).

Der Konverter ist parametrierbar und besitzt die folgenden Eigenschaften um diese Aufgaben zu lösen.
a) Der Konverter emuliert an seinem Eingang für Ansatz 1 die vom Stellwerk im Speisekreis erwartete Last und sorgt dafür, dass im Regelfall im Stellwerk die Überwachung des zugehörigen Kreises nicht anspricht und für Ansatz 2 die vom Stellwerk im Speisekreis erwartete Last, reduziert um die Leistung der direkt versorgten Einheiten, und sorgt dafür, dass im Regelfall im Stellwerk die Überwachung des zugehörigen Kreises nicht anspricht.
b) Der Konverter verarbeitet Strom und Spannungsparameter und steuert mindestens an einem Ausgang den Lastfluss.
c) Auf der Ausgangsseite verteilt er die Eingangsleistung minus den Eigenverbrauch für Ansatz 1 an die zu versorgenden Funktionseinheiten und, so erforderlich, an eine Ausgleichslast und/oder einen Energiespeicher und für Ansatz 2 an die zu versorgenden m Funktionseinheiten und, so erforderlich, an die Ausgleichslast und/oder den Energiespeicher.
d) Im einfachsten Regelfall ist die Ein- zu Ausgangsbilanz kontinuierlich ausgeglichen.
e) Die Ausgangslast ist im einfachsten Fall ein Widerstand. Ökonomischer und logischer ist eine Sekundärspeicher (Akku).
f) Ist die Bilanz nicht oder nicht kontinuierlich ausgeglichen (möglich ist in erster Linie ein Bezugsminus am Ausgang), so ist das mit einer zusätzlichen Last und oder mit einem Energiespeicher zu kompensieren.
g) Der Konverter berücksichtigt unterschiedliche Betriebsmodi wie Tag-/Nachtumschaltung.
h) Der Konverter ist vorzugsweise ein FPGA oder ein Mikrocontroller (z.B. ARM)
i) Die Zeitkonstanten der auftretenden Laständerungen sind gross im Verhältnis zur Regelzykluszeit des Konverters.

Der vom Stellwerk zur Verfügung gestellte Energiebezug wird mit dem Verfahren summarisch durch das Stellwerk kontrolliert. Gleicht nun der Konverter die Schwankungen im Energiefluss auf Seite seiner Ausgänge über die zusätzliche Last/Energiespeicher aus, so bliebe das Ausfallen einer mit Energie versorgten Funktionseinheit durch eine Veränderung vor allem einer Abnahme bis zum Ausbleiben des zugehörigen Energiebezuges für das Stellwerk unbemerkt. Es ist damit nicht möglich, ohne Massnahmen auf der Seite des Konverters Fehler mittels der summarischen Überwachung zu offenbaren.

Generell wird zwar die Annahme getroffen, dass die Zuverlässigkeit jeder der versorgten Funktionseinheiten hoch ist. Die unterschiedlichen technischen Eigenschaften und die Signifikanz der Vorzeichen bezüglich Erhöhung resp. Abnahme des Energiekonsums (Stromes) sowie die Unwahrscheinlichkeit des Eintretens eines common cause Fehlers verhindern mit hinreichender Zuverlässigkeit eine Verdeckung eines Doppelfehlers.

Es stehen selektive Verfahren entsprechend der Eigenschaften der Funktionseinheiten offen.
a) Das Verhalten bezüglich Energiebezug der versorgten Funktionseinheiten ist über die Zeit konstant. Der Konverter regelt somit die Last ebenfalls über die Zeit konstant. Ein Fehler wird im Stellwerk offenbart durch Über- oder Unterstrom, verursacht durch einen der Verbraucher.
b) Das Verhalten bezüglich dem Energiebezug der versorgten Funktionseinheiten ist nicht konstant. Im Konverter kann hierzu eine Lastmatrix hinterlegt werden, welche den Lastausgleich in den vorgegebenen zulässigen Grenzen steuert. Übersteigt das Delta die Grenze, so wird seitens des Konverters nicht mehr weiter nachgeregelt, was zu einem Erkennen der Abweichung durch das Stellwerk führt.
Alternativ kann der Konverter in einem solchen Fall durch den Lastabwurf oder eine andere Lastfehlanpassung die Rückmeldung an das Stellwerk forcieren.

Bevorzugt bei Lichtsignalen mit Glühlampen werden ihre Arbeitspunkte mittels eines Stromes definiert. Beim Aufstarten wird bei gleichzeitiger Strommessung die Betriebsspannung erhöht bis der definierte Strom erreicht ist. Es besteht nun die Möglichkeit, mittels des Konverters in der Einschaltphase mit einer entsprechenden Laststeuerung die sich einstellende Betriebsspannung zu beeinflussen. Das hat den Vorteil, dass z.B. je nach Situation Funktionseinheiten mit einem besseren Wirkungsgrad versorgt werden können. Weiter ist auch eine Ausweitung der Nutzbarkeit dieses Speiseverfahrens möglich.

Die ursprüngliche Funktionseinheit, z.B. ein Lichtsignal in der Aussenanlage mit einer Glühlampe, wird über die Speisespannung zwischen Tag und Nacht-Lichtstärke eingestellt. Die Substituierung der Lampe durch eine LED führt nun dazu, dass infolge des unterschiedlichen Verhaltens der Lichtstärke in Funktion der Aufnahmeleistung eine Anpassung erforderlich ist. In fast allen Anwendungen ist die Einstellung des Lichtstromes bei LED mit einer Pulsweitenmodulation ein sehr flexibles Verfahren Diese Aufgabe kann jedoch auch dem Konverter übertragen werden.

Diese vorstehenden Ausführungsbeispiele der Erfindung sind auch in den beiden Figuren 1 und 2 dargestellt.

### Ausgangslage

Ein Eisenbahnlichtsignal wird mittels einer 12V/20W- oder einer 40V/20W Glühlampe betrieben. Das Signal verfügt über eine Tag/Nachtumschaltung. Dabei wird die Spannung während dem Nachtbetrieb zur Zwecke der Lichtstärkereduzierung am Signal herabgesetzt. Die Versorgung vom Stellwerk her erfolgt nur, wenn die ursprüngliche bestimmungsgemässe Funktionalität aktiv sein muss (also wenn das Lichtsignal leuchtet).

### Erweiterung der Funktionalität

Die Glühlampe wird durch eine LED-Leuchte ersetzt und dadurch wird der Energiebedarf für die Signallichtquelle stark reduziert. Die Leistungsdifferenz wird nun dazu genutzt, eine oder mehrere LEU zu betreiben und diese kontrolliert direkt oder über den Konverter zu speisen. Der Konverter hat bei Bedarf jedoch die Eigenschaft, die Speicherung von Energie zu steuern und/oder wenn mehr als eine Energiequelle zur Verfügung steht, diese zu koordinieren. Dadurch können in der Funktionalität des Konverters die folgenden Aufgaben gelöst werden.
1. Kontrollierter Energiebezug des Aussenanlagenteiles bei Versorgung aus dem Stellwerk (Innen-Anlage) und damit Verhindern von falschpositiven Fehlermeldungen im Stellwerk.
2. Konstante Verfügbarkeit der Energieversorgung, z.B. von LEU bei Bedarf.
3. Erzeugung einer Fehlermeldung an das Stellwerk mittels Fehlanpassung der Bezugsleistung.
4. Energiemanagement bei mehreren Quellen und/oder bei Einsatz einer Speichereinrichtung für elektrische Energie.
5. Steuern der Lichtquelle im Tag- und Nachtbetrieb z.B. mittels Pulsweitenmodulation.

## Patentansprüche

1. Verfahren zur Speisung und/oder Überwachung von einer zusätzlichen Sicherungseinrichtung aus einem stellwerkseitig überwachten Stromkreis für eine von konventionellen Glühfadenlampen auf LED-Leuchtmittel umgestellte Lichtsignalanlage, umfassend die folgenden Schritte:
a) stellwerkseitiges Einspeisen einer dem gewünschten Einstellungszustand der Lichtsignalanlage entsprechenden elektrischen Gesamtleistung in den überwachten Stromkreis;
b) Erfassung der in den überwachten Stromkreis eingespeisten Gesamtleistung an einem in den überwachten Stromkreis eingeschalteten Konverter;
c) Verwaltung der in den überwachten Stromkreis eingespeisten Gesamtleistung durch den Konverter in einer Weise, dass
c1) die für den gewünschten Einstellungszustand erforderliche elektrische Leistung als eine erste Teilleistung an die Lichtsignalanlage abgegeben wird;
c2) eine Leistungsdifferenz zwischen der elektrischen Gesamtleistung und der abgegebenen ersten Teilleistung zumindest teilweise in Form einer Speiseleistung an die zusätzliche Sicherungseinrichtung abgegeben wird, wobei der Konverter eine allfällig verbleibende Differenz zwischen der eingespeisten Gesamtleistung und der Summe aus der ersten Teilleistung und der Speiseleistung verbraucht, vorzugsweise mittels eines vom Konverter gesteuerten Lastwiderstands, und/oder die allfällig verbleibende Differenz von dem Konverter gesteuert gespeichert wird.

2. Verfahren nach Anspruch 1,
**dadurch gekennzeichnet, dass**
die Verwaltung der in den überwachten Stromkreis eingespeisten Gesamtleistung durch den Konverter weiter so erfolgt, dass bei Vorliegen des bestimmungsgemässen Zustands der Lichtsignalanlage und/oder der zusätzlichen Sicherungseinrichtung die stellwerkseitig eingespeiste Gesamtleistung in dem überwachten Stromkreis innerhalb einer vordefinierten Toleranz aufgenommen wird.

3. Verfahren nach einem der vorangehenden Ansprüche,
**dadurch gekennzeichnet, dass**
anhand der vom Stellwerk eingespeisten elektrischen Gesamtleistung der gewünschte Einstellungszustand der Lichtsignalanlage mittels des Konverters ermittelt wird und die Höhe der ersten Teilleistung an diesen ermittelten Einstellungszustand angepasst wird.

4. Verfahren nach einem der vorangehenden Ansprüche,
**dadurch gekennzeichnet, dass**
im Konverter eine Leistungsmatrix für die erste Teilleistung in Abhängigkeit vom erwünschten Einstellungszustand hinterlegt wird und mittels des Konverters geprüft wird, ob die vorgesehene Teilleistung auch tatsächlich von der Lichtsignalanlage bezogen wird.

5. Verfahren nach Anspruch 4,
**dadurch gekennzeichnet, dass**
bei Überschreiten einer vorbestimmbaren Schwelle für den Unterschied der gemäss Leistungmatrix vorgegebenen Höhe der ersten Teilleistung und der tatsächlich konsumierten ersten Teilleistung eine Lastfehlanpassung konverterseitig vorgenommen wird, die in dem Stellwerk die Feststellung einer Grenzwertverletzung im überwachten Stromkreis auslöst.

6. Einrichtung zur Speisung und/oder Überwachung von einer zusätzlichen Sicherungseinrichtung aus einem stellwerkseitig überwachten Stromkreis für eine von konventionellen Glühfadenlampen auf LED-Leuchtmittel umgestellte Lichtsignalanlage, umfassend:
a) eine stellwerkseitige Einspeisung einer dem gewünschten Einstellungszustand der Lichtsignalanlage entsprechenden elektrischen Gesamtleistung in den überwachten Stromkreis;
b) einen Konverter, der die in den überwachten Stromkreis eingespeiste Gesamtleistung erfasst und
c) die in den überwachten Stromkreis eingespeiste Gesamtleistung in einer Weise überwacht, dass
c1) die für den gewünschten Einstellungszustand erforderliche elektrische Leistung als eine erste Teilleistung an die Lichtsignalanlage abgegeben wird;
c2) eine Leistungsdifferenz zwischen der elektrischen Gesamtleistung und der abgegebenen ersten Teilleistung zumindest teilweise als Speiseleistung an die zusätzliche Sicherungseinrichtung abgegeben wird, wobei der Konverter eine allfällig verbleibende Differenz zwischen der eingespeisten Gesamtleistung und der Summe aus der ersten Teilleistung und der Speiseleistung verbraucht, vorzugsweise mittels eines vom Konverter gesteuerten Lastwiderstands, und/oder die allfällig verbleibende Differenz von dem Konverter gesteuert gespeichert wird.

7. Einrichtung nach Anspruch 6,
**dadurch gekennzeichnet, dass**
die Verwaltung der in den überwachten Stromkreis eingespeisten Gesamtleistung durch den Konverter weiter so erfolgt, dass bei Vorliegen des bestimmungsgemässen Zustands der Lichtsignalanlage und/oder der zusätzlichen Sicherungseinrichtung die stellwerkseitig eingespeiste Gesamtleistung in dem überwachten Stromkreis innerhalb einer vordefinierten Toleranz aufgenommen wird.

8. Einrichtung nach Anspruch 6 oder 7, **dadurch gekennzeichnet, dass**
anhand der vom Stellwerk eingespeisten elektrischen Gesamtleistung der gewünschte Einstellungszustand der Lichtsignalanlage mittels des Konverters ermittelt wird und die Höhe der ersten Teilleistung an diesen ermittelten Einstellungszustand angepasst wird.

9. Einrichtung nach einem der vorangehenden Ansprüche 6 bis 8, **dadurch gekennzeichnet, dass**
im Konverter eine Leistungsmatrix für die erste Teilleistung in Abhängigkeit vom erwünschten Einstellungszustand hinterlegt ist und mittels des Konverters geprüft wird, ob die vorgesehene Teilleistung auch tatsächlich von der Aussenanlageneinrichtung bezogen wird.

10. Einrichtung nach Anspruch 9,
**dadurch gekennzeichnet, dass**
bei Überschreiten einer vorbestimmbaren Schwelle für den Unterschied der gemäss Leistungmatrix vorgegebenen Höhe der ersten Teilleistung und der tatsächlich konsumierten ersten Teilleistung eine Lastfehlanpassung konverterseitig vorgenommen wird, die in dem Stellwerk die Feststellung einer Grenzwertverletzung im überwachten Stromkreis auslöst.

## Claims

1. Method for feeding and/or monitoring of an additional safety device from an electric circuit, monitored from the side of the interlocking system, for a light signal system converted from conventional incandescent light bulb to LED illuminant, comprising:
a) Feeding in electrical total power conforming to the desired state of settings of the light signal system from the side of the interlocking system into the monitored electricity circuit;
b) detecting the total power fed into the monitored electricity circuit at a converter connected to the monitored electricity circuit;
c) maintaining the total power fed into the monitored electricity circuit by means of the converter in a way that
c1) the electrical power required for the desired state of settings is delivered to the light signal system as a first partial power;
c2) a power difference between the electrical total power and the delivered first partial power is delivered at least partially in form of a feeding power to the additional safety devices, wherein the converter consumes a possibly remaining difference between the fed total power and the sum of the first partial power and the feeding power, preferably by means of a load resistance, controlled by the converter and/or the possibly remaining difference, controlled by the converter, is stored.

2. Method according to claim 1,
**characterized in that**
the maintaining of the total power fed into the monitored electricity circuit continues to be carried out so that in case the intended state of the light signal system and/or the additional safety device is present the total power fed in from the side of the interlocking system is incorporated into the monitored electricity circuit within a predefined tolerance.

3. Method according to any of the preceding claims,
**characterized in that**
the desired state of settings of the light signal system is determined through the converter by means of the electrical total power fed by the interlocking system and that the level of the first partial power is adjusted to this determined state of settings.

4. Method according to any of the preceding claims,
**characterized in that**
a power matrix is deposited in the converter depending on the desired state of settings for the first partial power and that it is checked by the converter whether the designated partial power is actually received by the light signal system.

5. Method according to claim 4,
**characterized in that**
a load mismatch is performed on the side of the converter in the case of exceeding a predeterminable threshold for the difference between the level of the first partial power predefined according to the power matrix and the actual consumed first partial power, triggering that a violation of the threshold is detected in the monitored electricity circuit.

6. Device for feeding and/or monitoring of an additional safety device from an electric circuit, monitored from the side of the interlocking system, for a light signal system converted from conventional incandescent light bulb to LED illuminant, comprising:
a) the feeding in of electrical total power conforming to the desired state of settings of the light signal system from the side of the interlocking system into the monitored electricity circuit;
b) a converter that detects the total power fed into the monitored electricity circuit and;
c) maintains the total power fed into the monitored electricity circuit in a way that
c1) the electrical power required for the desired state of settings is delivered to the light signal system as a first partial power;
c2) a power difference between the electrical total power and the delivered first partial power is delivered at least partially in form of a feeding power to the additional safety devices, wherein the converter consumes a possibly remaining difference between the fed total power and the sum of the first partial power and the feeding power, preferably by means of a load resistance, controlled by the converter and/or the possibly remaining difference, controlled by the converter, is stored.

7. Device according to claim 6,
**characterized in that**
the maintaining of the total power fed into the monitored electricity circuit continues to be carried out so that in case the intended state of the light signal system and/or the additional safety device is present the total power fed in from the side of the interlocking system is incorporated into the monitored electricity circuit within a predefined tolerance.

8. Device according to claim 6 or 7,
**characterized in that**
the desired state of settings of the light signal system is determined through the converter by means of the electrical total power fed by the interlocking system and that the level of the first partial power is adjusted to this determined state of settings.

9. Device according any of the preceding claims 6 to 8,
**characterized in that**
a power matrix is deposited in the converter depending on the desired state of settings for the first partial power and that it is checked by the converter whether the designated partial power is actually received by the outdoor installation device.

10. Device according to claim 9,
**characterized in that**
a load mismatch is performed on the side of the converter in the case of exceeding a predeterminable threshold for the difference between the level of the first partial power predefined according to the power matrix and the actual consumed first partial power, triggering that a violation of the threshold is detected in the monitored electricity circuit.

## Revendications

1. Procédé d'alimentation et/ou de surveillance d'un dispositif de sécurisation supplémentaire à partir d'un circuit de courant électrique surveillé côté poste d'aiguillage pour une installation de signalisation lumineuse utilisant non plus des lampes à filament incandescent conventionnelles, mais des sources d'éclairage à DEL, comprenant les étapes suivantes :
a) injection, côté poste d'aiguillage, dans le circuit de courant électrique surveillé, d'une puissance électrique totale correspondant à l'état de réglage souhaité de l'installation de signalisation lumineuse ;
b) détection de la puissance totale injectée dans le circuit de courant électrique surveillé au niveau d'un convertisseur placé dans le circuit de courant électrique surveillé ;
c) gestion, par le convertisseur, de la puissance totale injectée dans le circuit de courant électrique surveillé de manière telle que :
c1) la puissance électrique requise pour l'état de réglage souhaité est délivrée en tant que première puissance partielle à l'installation de signalisation lumineuse ;
c2) une différence de puissance entre la puissance électrique totale et la première puissance partielle délivrée est délivrée au moins en partie sous forme de puissance d'alimentation au dispositif de sécurisation supplémentaire, le convertisseur consommant, de préférence au moyen d'une résistance de charge commandée par le convertisseur, une différence éventuellement restante entre la puissance totale injectée et la somme de la première puissance partielle et de la puissance d'alimentation et/ou la puissance éventuellement restante étant stockée de manière commandée par le convertisseur.

2. Procédé selon la revendication 1, **caractérisé en ce que** la gestion de la puissance totale injectée dans le circuit de courant électrique surveillé est ensuite effectuée par le convertisseur de manière telle que, en présence de l'état conforme à l'usage prévu de l'installation de signalisation lumineuse et/ou du dispositif de sécurisation supplémentaire, la puissance totale injectée côté poste d'aiguillage est absorbée dans le circuit de courant électrique surveillé dans les limites d'une tolérance prédéfinie.

3. Procédé selon l'une des revendications précédentes, **caractérisé en ce que** l'état de réglage souhaité de l'installation de signalisation lumineuse est établi au moyen du convertisseur sur la base de la puissance électrique totale injectée par le poste d'aiguillage et **en ce que** la hauteur de la première puissance partielle est adaptée à cet état de réglage déterminé.

4. Procédé selon l'une des revendications précédentes, **caractérisé en ce qu'**est déposée, dans le convertisseur, une matrice de puissance pour la première puissance partielle en fonction de l'état de réglage souhaité et **en ce qu'**il est vérifié, au moyen du convertisseur, si la puissance partielle prévue est effectivement captée par l'installation de signalisation lumineuse.

5. Procédé selon la revendication 4, **caractérisé en ce que**, en cas de dépassement d'un seuil prédéterminable de la différence entre la hauteur, spécifiée selon la matrice de puissance, de la première puissance partielle et la première puissance partielle effectivement consommée, une désadaptation de charge est opérée, côté convertisseur, laquelle déclenche, dans le poste d'aiguillage, la constatation d'une violation de valeur limite dans le circuit de courant électrique surveillé.

6. Dispositif d'alimentation et/ou de surveillance d'un dispositif de sécurisation supplémentaire à partir d'un circuit de courant électrique surveillé côté poste d'aiguillage pour une installation de signalisation lumineuse utilisant non plus des lampes à filament incandescent conventionnelles, mais des sources d'éclairage à DEL, comprenant :
a) une injection, côté poste d'aiguillage, dans le circuit de courant électrique surveillé, d'une puissance électrique totale correspondant à l'état de réglage souhaité de l'installation de signalisation lumineuse ;
b) un convertisseur qui détecte la puissance totale injectée dans le circuit de courant électrique surveillé et
c) qui surveille la puissance totale injectée dans le circuit de courant électrique surveillé de manière telle que :
c1) la puissance électrique requise pour l'état de réglage souhaité est délivrée en tant que première puissance partielle à l'installation de signalisation lumineuse ;
c2) une différence de puissance entre la puissance électrique totale et la première puissance partielle délivrée est délivrée au moins en partie sous forme de puissance d'alimentation au dispositif de sécurisation supplémentaire, le convertisseur consommant, de préférence au moyen d'une résistance de charge commandée par le convertisseur, une différence éventuellement restante entre la puissance totale injectée et la somme de la première puissance partielle et de la puissance d'alimentation et/ou la différence de puissance éventuellement restante étant stockée de manière commandée par le convertisseur.

7. Dispositif selon la revendication 6, **caractérisé en ce que** la gestion de la puissance totale injectée dans le circuit de courant électrique surveillé est ensuite effectuée par le convertisseur de manière telle que, en présence de l'état conforme à l'usage prévu de l'installation de signalisation lumineuse et/ou du dispositif de sécurisation supplémentaire, la puissance totale injectée côté poste d'aiguillage est absorbée dans le circuit de courant électrique surveillé dans les limites d'une tolérance prédéfinie.

8. Dispositif selon la revendication 6 ou 7, **caractérisé en ce que** l'état de réglage souhaité de l'installation de signalisation lumineuse est établi au moyen du convertisseur sur la base de la puissance électrique totale injectée par le poste d'aiguillage et **en ce que** la hauteur de la première puissance partielle est adaptée à cet état de réglage déterminé.

9. Dispositif selon l'une des revendications précédentes 6 à 8, **caractérisé en ce qu'**est déposée, dans le convertisseur, une matrice de puissance pour la première puissance partielle en fonction de l'état de réglage souhaité et **en ce qu'**il est vérifié, au moyen du convertisseur, si la puissance partielle prévue est effectivement captée par l'installation extérieure.

10. Dispositif selon la revendication 9, **caractérisé en ce que**, en cas de dépassement d'un seuil prédéterminable de la différence entre la hauteur, spécifiée selon la matrice de puissance, de la première puissance partielle et la première puissance partielle effectivement consommée, une désadaptation de charge est opérée, côté convertisseur, laquelle déclenche, dans le poste d'aiguillage, la constatation d'une violation de valeur limite dans le circuit de courant électrique surveillé.
